# EUROPÄISCHE PATENTANMELDUNG

(11) **EP 1 467 057 A2**
(43) Veröffentlichungstag der Anmeldung: **13.10.2004**
(21) Anmeldenummer: 03024516.1
(22) Anmeldetag: 27.10.2003
(51) Int. Cl.: E05F 15/20

(54) **Türraumüberwachungsvorrichtung zur Überwachung eines Türschwenkbereiches einer Kraftfahrzeugtüre**

(30) Priorität: 11.04.2003 DE 10317041
(71) Anmelder: DaimlerChrysler AG, 70567 Stuttgart (DE)
(72) Erfinder: Dickmann, Jürgen, Dr., 89079 Ulm (DE); Mekhaiel, Moheb, Dr., 89233 Neu-Ulm (DE); Skutek, Michael, 89081 Ulm (DE)

(57) **Zusammenfassung**

Die Erfindung betrifft eine Türraumüberwachungsvorrichtung zur Überwachung eines Türschwenkbereiches einer Kraftfahrzeugtüre.

Die Türraumüberwachungsvorrichtung ist mit den Türschwenkbereich erfassenden Sensormitteln, mit einer Sensordaten auswertenden Auswerteeinrichtung und mit einer Steuereinheit zur Steuerung von Sensormitteln oder von Auswerteeinrichtungen versehen. Das Sensormittel weist eine Lichtquelle zur Ausendung eines verschwenkbaren Lichtstrahls, eine Mikro-Spiegel-Einheit und einem Photoempfänger zur Erfassung des flächigen Überwachungsbereiches aufweist. Vorzugsweise ist der Mikro-Spiegel-Einheit mit ihrem wenigstens einen mikromechanisch verschenkbaren planen Spiegel ein zusätzlicher nicht planer Spiegel zugeordnet. Die Türraumüberwachungsvorrichtung zeichnet sich durch eine sehr kompakte und sichere Funktionsweise aus.

## Beschreibung

Die Erfindung betrifft eine Türraumüberwachungsvorrichtung zur Überwachung eines Türschwenkbereiches einer Kraftfahrzeugtüre.

Eine derartige Vorrichtung ist aus der DE 101 17 516 A1 bekannt. Sie zeigt Sensormittel, welche den Türschwenkbereich erfassen, eine Auswerteeinrichtung, die die Sensordaten auswerten und eine Steuereinheit, die die Steuerung der Komponenten der Türraumüberwachungsvorrichtung bewirkt. Die Sensormittel sind als Radarsensoren ausgebildet, welche einen ausgeprägten Volumenbereich vor der Kraftfahrzeugtüre erfassen und überwachen. Diese Sensormittel sind typisch als Mikrostreifenantennen ausgebildet, die von beachtlicher Größe sind.

Aus der DE 41 19 579 A1 ist eine Vorrichtung zum Erfassen von Gegenständen im nicht direkt einsehbaren Sichtfeld eines Fahrzeuges mit einer berührungslos in das Sichtfeld gerichteten Abstandsmessvorrichtung, welche auf Ultraschall- Infrarot- oder Radarbasis arbeitet, bekannt. Bei der Detektion einer Annäherung eines Gegenstandes an eine Kraftfahrzeugtür bzw. in den durch die Abstandsmessvorrichtung überwachten Bereich so wird eine Türbremse aktiviert. Die Abstandsmessvorrichtung ist in der Tür angeordnet. Eine entsprechende Anordnung ist ebenso aus dem USA-Patent US 4,458,446 A1 bekannt. Bei dieser wird anhand einer Laufzeituntersuchung von Ultraschallpulsen der Abstand zu einem potentiellen Kollisionsobjekt bestimmt.

Aus dem deutschen Patent DE 196 26 097 C1 ist eine Anordnung zur Bilddarstellung auf einer Großbildprojektionsfläche mittels eines einen DMD-Chip aufweisenden DMD-Projektors beschrieben. Der DMD-Chip wird auch Mikro-Spiegel-Einheit genannt. Die Mikro-Spiegel-Einheit stellt typischerweise einen Chip dar, auf dessen Oberfläche mehrere Tausend kleine einzeln steuerbare Mikrospiegel angebracht sind. Durch Veränderung der Ausrichtung der einzelnen Spiegel wird ein Bild erzeugt, das über eine Optik auf die Großbildprojektionsfläche projiziert wird. Jeder Mikrospiegel wirft dabei das ankommende Licht auf einen Bildpunkt der Großbildprojektionsfläche. Dabei wird durch eine entsprechende Steuerung des jeweiligen Mikrospiegels dafür gesorgt, dass eine Farbmischung gegeben ist, die für die Darstellung der einzelnen Bildpunkte benötigt wird. Die Farbmischung wird bewerkstelligt, indem der jeweilige Mikrospiegel immer dann eine entsprechend lange Zeitdauer einen Lichtstrahl auf eine Position der Projektionsfläche wirft, wenn ihm ein entsprechender Farbstrahl durch das Farbfilter angeboten wird. Dabei wird die Verkippung oder Auslenkung der Mikrospiegel zielgerichtet sowohl räumlich, als auch zeitlich so gesteuert, dass die darzustellende Bildinformation zielgerichtet übertragen wird.

Der Erfindung liegt die Aufgabe zugrunde, eine Türraumüberwachungsvorrichtung entsprechend dem Oberbegriff des Patentanspruchs 1 anzugeben, die kompakt ausgebildet ist und ein ausreichend sicheres Identifizieren von störenden Objekten, die zu einer Kollision der Kraftfahrzeugtür führen können, ermöglicht.

Diese Aufgabe wird gelöst durch eine Türraumüberwachungsvorrichtung mit den Merkmalen des geltenden Patentanspruchs 1.

Weitere vorteilhafte Ausgestaltungen der Erfindung sind Gegenstand von Unteransprüchen.

Die erfindungsgemäße Türraumüberwachungsvorrichtung zeigt Sensormittel, welche einen im wesentlichen flächig ausgebildeten Überwachungsbereich überwachen, in dem sie wenigstens eine Lichtquelle zur Aussendung eines Lichtstrahls und mindestens einen Photoempfänger zur Erfassung des flächigen Überwachungsbereichs aufweist, wobei der von der Lichtquelle ausgesandte Lichtstrahl über mindestens eine Mikro-Spiegel-Einheit verschwenkbar abgelenkt wird. Durch diese verschwenkbare Ausbildung des Lichtstrahls in einen im wesentlichen flächigen Überwachungsbereich gelingt es, eine sichere Überwachung des Überwachungsbereichs auf einfache Weise zu realisieren. Der flächige Überwachungsbereich wird regelmäßig mit der Tür verschwenkt und überstreicht den relevanten Türschwenkbereich dahingehend, dass ein Gegenstand, der mit der Tür zusammenstoßen könnte, sicher erfasst wird. Durch die Verwendung einer Mikro-Spiegel-Einheit gelingt es, eine sehr kompakte und flexible Türraumüberwachungsvorrichtung zu realisieren, die sich durch die große Flexibilität der Mikrospiegel der Mikro-Spiegel-Einheit , welche durch die Steuereinheit zielgerichtet verschwenkt werden, eine einfache, kompakte und standardisierte Türraumüberwachungsvorrichtung auszeichnet. Sie ist ohne wesentliche Hardware-Änderungen für verschiedene Kraftfahrzeugtüren geeignet.

Neben der Möglichkeit, mehrere voneinander getrennte Lichtstrahlen in den Überwachungsbereich einzustrahlen, um den Überwachungsbereich zu bilden, hat es sich bewährt, einen oder wenige Lichtstrahlen scannend durch den flächigen Überwachungsbereich zu verschwenken und dadurch den Überwachungsbereich vollständig zu erfassen und auf störende Hindernisse zu untersuchen. Dabei hat sich die scannende Ausbildung des Sensormittels als besonders vorteilhaft erwiesen, da diese Ausbildung typisch mit einer einzigen Lichtquelle auskommt. Durch die gezielte Ansteuerung durch die Steuereinheit der Mikro-Spiegel-Einheit ist eine sehr einfach anzupassende Türraumüberwachungsvorrichtung gegeben.

Es hat sich besonders bewährt, die Mikro-Spiegel-Einheit mit wenigstens einem mikromechanisch verschwenkbaren planen Spiegel zu versehen und zusätzliche einen weitere nicht planen Spiegel vorzusehen und der Mikro-Spiegel-Einheit zuzuordnen. Durch das Vorsehen des zweiten, zusätzlichen nicht planen Spiegels gelingt es, ein wesentlich flexibleres und kompakteres Sensormittel für die erfindungsgemäße Türraumüberwachungsvorrichtung zu schaffen, die durch den zusätzlichen Freiheitsgrad des nicht planen Spiegels zur wiederholten Ablenkung des Lichtstrahls der Lichtquelle die Möglichkeit schafft, auf einfache Weise eine Vielzahl von flächigen, insbesondere nicht planen, Überwachungsbereichen auszubilden und diese auf das Vorhandensein von störenden, kollisionsgefährdeten Gegenständen zu überwachen. Dabei hat es sich besonders bewährt, den zusätzlichen, nicht planen Spiegel in seiner Kontur entsprechend der Kontur der Kraftfahrzeugtür auszubilden. Dadurch gelingt es, die flächige, nicht plane Kontur der Kraftfahrzeugtür in eine dementsprechende flächige, nicht plane Gestalt des Überwachungsbereiches zu übertragen und dadurch eine verlässliche Aussage über die Gefahr einer Kollision der Tür mit einem Hindernis zu gewinnen. Insbesondere wird durch diese konturangepasste Realisierung des zusätzlichen Spiegels die Möglichkeit geschaffen, den Überwachungsbereich in einem klar definierten Abstand von der Tür verlaufen zu lassen, wobei der Abstand über die Fläche betrachtet weitgehend konstant gewählt ist. Dabei ist der Abstand so gewählt, dass ein sicheres Abstoppen der Tür insbesondere bei einem automatisierten Öffnungsvorgang der Tür, gegeben ist.

Als besonders vorteilhaft hat es sich erwiesen, den zusätzlichen Spiegel verschwenkbar auszubilden. Dadurch wird die Möglichkeit geschaffen, die Türraumüberwachungsvorrichtung sehr flexibel an geänderte Rahmenbedingungen anzupassen. Als besonders vorteilhaft hat es sich erwiesen, den zusätzlichen, nicht planen Spiegel mikromechanisch angetrieben auszubilden und den mikromechanischen Antrieb durch die Steuereinheit zur Steuerung der Mikro-Spiegel-Einheit gesteuert vorzunehmen. Durch diese gemeinsame Steuerung ist sichergestellt, dass ein abgestimmtes, optimiertes und sicheres Steuern der Spiegel gewährleistet ist und dadurch ein sicheres Erkennen von Hindernissen erreicht werden kann.

Es hat sich als besonders vorteilhaft erwiesen, die Lichtquelle zur Aussendung eines Lichtstrahls, die Mikro-Spiegel-Einheit und den Photoempfänger zur Erfassung des im wesentlichen flächigen Überwachungsbereiches an oder im Außenspiegel anzuordnen, wobei der Außenspiegel direkt mit der Tür verbunden ist. Dadurch ist sichergestellt, dass der Außenspiegel mit der Kraftfahrzeugtür beim Öffnen derselben mit verschwenkt wird und dementsprechend auf entsprechende Verschwenkungen der Spiegel der Mikro-Spiegel-Einheit zur Anpassung des Überwachungsbereiches an das Maß des Öffnens der Tür verzichtet werden kann. Dies führt zu einer wesentlich einfacheren Steuerung und damit zu einer wesentlich robusteren Türraumüberwachungsvorrichtung. Durch diese Wahl der Position an oder im Außenspiegel ist es möglich geworden, die Ansteuerung des wenigstens einen Spiegel in der Mikro-Spiegel-Einheit dahingehend sehr einfach zu gestalten, dass der oder die Lichtstrahlen ausschließlich in dem einen flächigen Überwachungsbereich verlaufen und insbesondere in diesem flächigen Überwachungsbereich verschwenkt werden. Dadurch ist sichergestellt, dass mit dem Verschwenken der Tür automatisch der relativ zu der Tür ortsfeste, im wesentlichen flächige Überwachungsbereich mit der Tür über den Verschwenkbereich der Tür hinweggleitet und eine sichere Überwachung des Türschwenkbereiches gegeben ist. In entsprechende Weise hat sich ein Einbauort in oder am Türgriff einer Kraftfahrzeugtüre bewährt.

Daneben hat es sich besonders bewährt, die Lichtquelle, die Mikro-Spiegel-Einheit und den Photoempfänger im Bereich der Schwenkachse der Tür anzuordnen, was wiederum eine recht einfache Steuerung der Spiegel durch die Steuereinheit ermöglicht, da im wesentlichen nur der Verschwenkwinkel der Tür durch entsprechendes Verschwenken der mikromechanischen Spiegel kompensiert werden muss. Ein aufwendiges Kompensieren von wesentlichen, beachtlichen Versetzungen der Komponenten der Sensoreinheit relativ zu der Schwenkachse müssen nicht besorgt werden, was die Steuerung und damit den Aufbau der Sensoreinheit wesentlich vereinfacht und die Funktionsfähigkeit der Sensoreinrichtung für die Türraumüberwachungsvorrichtung im besonderen Maß sichert. Als besonders vorteilhaft hat es sich erwiesen, die Komponenten der Sensoreinheit im Bereich der Schwenkachse in einem Außenspiegel an der Kraftfahrzeugtür anzuordnen. In diesem Fall ist eine besonders einfache Steuerung der Spiegel ermöglicht.

Darüber hinaus hat es sich besonders bewährt, die Lichtquelle, die Mikro-Spiegel-Einheit , der Photoempfänger und gegebenenfalls die Auswerte- bzw. die Steuereinheit in einem gemeinsamen Gehäuse anzuordnen. Dadurch gelingt es, die optische Beziehung der optischen Komponenten der Sensoreinheit mechanisch dauerhaft und sicher festzulegen. Dadurch ist gewährleistet, dass gerade bei den schwierigen Verhältnissen in einem Fahrzeug, die unter andrem durch Erschütterungen und Stöße geprägt sind, eine sichere und langfristig sichere Überwachung des Türschwenkraums gegeben ist. Eine Dejustage der einzelnen Komponenten ist durch die Anordnung in einem gemeinsamen Gehäuse und damit auf einer gemeinsamen mechanischen Basis und damit in definierter räumlicher Zuordnung zueinander weitgehend verhindert. Dies führt zu einer kompakten und sicheren Türraumüberwachungsvorrichtung.

Neben der Möglichkeit, als Lichtquelle eine Laserlichtquelle oder eine lichtemittierende Diode zu verwenden, hat es sich besonders bewährt, eine kostengünstige und robuste PIN-Diode als Photoempfänger vorzusehen. Durch diese besondere Wahl der Ausbildung des Überwachungsbereiches als flächiger Überwachungsbereiches gelingt es, auf aufwändige, kostenintensive Avalanche-Fotodioden zu verzichten und einfache, robuste und kostengünstige PIN-Fotodioden als Photoempfänger zu verwenden. Vorzugsweise werden Lichtquellen und Photoempfänger verwendet, die insbesondere ausschließlich nicht sichtbare IR-Strahlung aussenden beziehungsweise empfangen.

Es hat sich als besonders vorteilhaft erwiesen, die Steuereinheit so auszubilden, dass die Lichtstärke der Lichtquelle so gewählt ist, dass die durch das Verschwenken der mikromechanischen Spiegel der Mikro-Spiegel-Einheit bedingten Veränderungen in dem Reflektionsverhalten dahingehend kompensiert werden, dass der durch die Mikrospiegel reflektierte Lichtstrahl im wesentlichen dieselbe Lichtstärke aufweist, unabhängig von dem Maß des Kippwinkels und damit dem Verschwenken der mikromechanischen Spiegel. Durch diese Steuerung der Lichtquelle gelingt es, stets einen in seiner Lichtstärke konstanten und damit definierten, von den Spiegeln reflektierten Lichtstrahl durch die Sensoreinheit in den Überwachungsbereich auszustrahlen und eine einfache Auswertung der durch den Photoempfänger empfangenen reflektierten Strahlung zu ermöglichen. Dies führt zu einem verlässlichen Hinweis auf das Vorhandensein eines Hindernisses im Überwachungsbereich und damit im Schwenkbereich der Kraftfahrzeugtür, ohne dass aufwändige und komplizierte Vorkehrungen zur differenzierten Auswertung getroffen werden müssen.

Es hat sich als besonders vorteilhaft erwiesen, die Mikro-Spiegel-Einheit zwischen der Lichtquelle und dem Photoempfänger anzuordnen und seitlich dazu versetzt die Steuereinheit und/oder die Auswerteinrichtung anzuordnen. Dadurch gelingt es in besonders vorteilhafter weise die Stelle des Lichtaustrittes aus und des Lichteintrittes in das Sensormittel sehr nahe zusammenzurücken, was eine vereinfachte und verlässliche Auswertung ermöglicht. Es hat sich besonders bewährt, die Steuereinheit und die Auswerteeinheit auf einer gemeinsamen Platine auszubilden. Dabei wird die Lichtquelle, die Mikro-Spiegel-Einheit und der Photoempfänger vorzugsweise in einem gemeinsamen Gehäuse mit der Steuereinheit und/oder der Auswerteeinrichtung angeordnet und mechanisch fest mit dem Gehäuse verbunden. Dabei hat es sich besonders bewährt, die Mikro-Spiegel-Einheit , die Lichtquelle und den Photoempfänger an einer gemeinsamen Wand des Gehäuses, das kann eine Außenwand des Gehäuses aber auch eine Wand innerhalb der Außenwände des Gehäuses sein, zu befestigen. Durch diese Anordnung und Befestigung an einer gemeinsamen Wand ist eine sehr stabile mechanische Anordnung geschaffen, die eine sehr verlässliche Aussendung eines oder mehrerer Lichtstrahlen sowie den Empfang der reflektierten Lichtstrahlen oder des reflektierten Lichtstrahls ermöglicht. Dabei ist dies auch unter sehr schwierigen, insbesondere vibrationsgefährdeten oder unter stark stoßbedingten Situationen gewährleistet.

Darüber hinaus hat es sich besonders bewährt, die Sensoreinheit so auszubilden, dass der Lichtstrahl über einen vorgegebenen Winkelbereich verschwenkt wird, indem mittels der Steuereinheit der wenigstens eine mikromechanische Spiegel der Mikro-Spiegel-Einheit dementsprechend gesteuert verschwenkt wird. Dabei wird die Verschwenkung der mikromechanischen Spiegel so vorgenommen, dass eine flächige oder weitgehend flächige Ausbildung des Überwachungsbereichs und ein Durchschwenken des oder der Lichtstrahlen durch den flächigen Überwachungsbereich gegeben ist. Durch diese Ausbildung der Sensoreinheit für die Türraumüberwachungsvorrichtung gelingt es, einerseits auf aufwändige, leistungsstarke Lichtquellen zu verzichten, da nur ein oder wenige Lichtstrahlen von begrenzter Lichtstärke erzeugt werden müssen, ohne dass eine ausreichende Sicherheit für die Erfassung von Hindernissen in dem Überwachungsbereich gefährdet ist. Mithin gelingt es, eine einfache und kompakte Sensoreinheit zu schaffen, die mit Hilfe einer einfachen Steuerung zur Verschwenkung des oder der wenigen Lichtstrahlen in dem flächigen Überwachungsbereich eine sichere Hindernisdetektion gewährleistet.

Als besonders vorteilhaft hat es sich erwiesen, die Steuereinheit so auszubilden, dass das Verschwenken über den vorgegebenen Schwenkbereich, der bevorzugt die ganze Türfläche oder wesentliche Teile davon überstreicht, innerhalb einer Zeitspanne TS von unter 5 ms erfolgt. Durch die Verwendung der mikromechanischen Spiegel in der Mikro-Spiegel-Einheit gelingt es, diese schnellen Verschwenkungen zu realisieren, ohne dass aufwändige mechanische Vorkehrungen zur sicheren Führung und Lagerung der verschwenkten Elemente notwendig sind. Diese kurze Verschwenkzeit schafft die Möglichkeit, dass die Lichtquelle nur für diese kurze Verschwenkzeit eingeschaltet und damit aktiv ist, und für einen nachfolgenden langen Zeitraum zielgerichtet nicht in Betrieb und damit ausgeschaltet sein kann. Vorzugsweise wird diese Zeit bis zu dem nächsten Verschwenken im Bereich von 25 ms oder darüber gewählt. Dadurch ist gewährleistet, dass die Lichtquelle nicht kontinuierlich in Betrieb ist und damit nicht so schnell altert als beim Dauerbetrieb. Damit ist eine wesentlich längere Lebenszeit der Lichtquelle und damit eine längere Funktionsfähigkeit der erfindungsgemäßen Türüberwachungsvorrichtung gegeben. Darüber hinaus ist durch das Verschwenken in den kurzen Zeitraum TS von etwa 5 ms oder darunter sichergestellt, dass ein Eindringen eines Hindernisses in den Überwachungsbereich auch bei einem schnellen Öffnen sicher detektiert wird. Daran ändert auch die Wahl der Pausenzeit bis zu dem nächsten aktiven Verschwenken und damit Überwachen im Bereich von über 25 ms, vorzugsweise unter 50 ms, nichts. Es hat sich als besonders vorteilhaft herausgestellt, das Verhältnis zwischen Überwachungs- respektive Verschwenkzeit zur Pausenzeit im Bereich von etwa 1 zu 10 zu wählen. Dies führt zu einer sicheren Überwachung des Verschwenkbereichs und zu einer langlebigen Türraumüberwachungsvorrichtung.

Alternativ hat es sich bewährt, die Türraumüberwachungsvorrichtung so auszubilden, dass die Steuereinheit die Lichtquelle und insbesondere den Photoempfänger so ansteuert, dass im wesentlichen nur während der Verschwenkvorgänge der Mikro-Spiegel-Einheit insbesondere nur während jedes n-ten Verschenkvorgang mit n kleiner 10 aktiviert ist. Im übrigen sind die Lichtquelle bzw. der Photoempfänger nicht aktiviert. Dies führt einerseits zu einem merklich reduzierten Energiebedarf und im übrigen zu einer reduzierten mittleren Strahlungsleistung der Überwachungsvorrichtung bzw. der Lichtquelle, so dass eine Einstufung in eine niedriger Gefahrenklasse beispielsweise in die Laserklasse 1 möglich ist und dadurch weniger zusätzliche konstruktive Maßnahmen zum Schutz von Passanten notwendig sind. Dies führt zu einfacher aufgebauten erfindungsgemäßen Überwachungseinrichtungen.

Es hat sich als besonders vorteilhaft erwiesen, die Lichtquelle bzw. die Mikro-Spiegel-Einheit bzw. den Photoempfänger so anzuordnen, dass der Abstand des flächigen Überwachungsbereiches zu der Fahrzeugtür mit zunehmendem Abstand von der Schwenkachse der Kraftfahrzeugtür im wesentlichen zunimmt. Hierdurch ist gewährleistet, dass ein Hindernis in dem Bereich der größten Verschwenkgeschwindigkeit der Kraftfahrzeugtür bereits in einem größeren Abstand von der Tür erfasst und als störendes Hindernis erkannt wird, als in einem Bereich mit geringerer Verschwenkgeschwindigkeit. Da diese Verschwenkgeschwindigkeiten direkt mit dem Abstand von der Schwenkachse der Tür korrelieren, hat es sich besonders bewährt, den Abstand des flächigen Überwachungsbereich dort besonders groß zu wählen, wo die Verschwenkgeschwindigkeit der Tür besonders groß und damit der Abstand von der Schwenkachse der Kraftfahrzeugtür besonders groß ist. Durch diese Ausbildung bzw. Anordnung der Komponenten der Sensoreinheit und damit die Ausbildung des flächigen Überwachungsbereichs relativ zu der Fahrzeugtür gelingt ist, eine sehr verlässliche Aussage über das Gefährdungspotential eines Hindernisses im Bereich der Tür zu treffen und damit ein Beschädigen der Tür beispielsweise durch Vorsehen eines Warnsignals und/oder eines automatischen Stops für das weitere Ausschwenken der Tür zu verhindern. Mithin ist eine sehr sichere und verlässliche Türraumüberwachungsvorrichtung gegeben.

Als besonders vorteilhaft hat es sich erwiesen, die Sensormittel dahingehend auszubilden, dass eine Abstandsmessung zwischen dem Sensormittel und dem vermeintlichen Hindernis unter Verwendung eines Phasenlaufzeitmessverfahrens erfolgt. Durch die Verwendung des Phasenlaufzeitmessverfahrens zur Bestimmung des Abstandes zwischen dem Sensormittel und dem potentiellen Hindernis gelingt es, im Gegensatz zu den bekannten Pulslaufzeitmessverfahren, die notwendige optische Sendeleistung geringer zu wählen, ohne dass es zu einer wesentlichen Verschlechterung der Auswertung führt. Darüber hinaus kann durch die Wahl der Modulation, insbesondere durch die Wahl einer breitbandigen Modulation, der Einfluss von Drift oder Temperatur auf die Auswertung erheblich reduziert werden. Durch diese erfindungsgemäße Wahl des Abstandsmessverfahrens in Form eines Phasenlaufzeitverfahrens gelingt es, eine kompakte Anordnung mit sicherer und sehr genauen Auswertung der Abstandsinformation zu schaffen, die es ermöglicht, zu beurteilen, ob ein detektiertes potentielles Hindernis tatsächlich in dem relevanten Türschwenkbereich liegt oder nicht.

Dies erfolgt bevorzugt durch Vergleich der gemessenen Abstandsinformation mit einer insbesondere in Form einer Look-up-Tabelle hinterlegten Gestalt der Kraftfahrzeugtür. Diese hinterlegte Gestalt der Kraftfahrzeugtür wird als Referenz und damit als Vergleichsgröße für den gemessenen Abstand gewählt, so dass erkannt werden kann, dass beispielsweise ein Hindernis, das einen größeren Abstand als das Ausmaß der Tür in die betreffende Richt zeigt, nicht zu einem Zusammenprall mit der Kraftfahrzeugtür führen kann und somit nicht als reelles Hindernis interpretiert wird. Neben den Abstandsinformationen wird bevorzugt eine zusätzliche Winkelauflösung in dem flächigen Überwachungsbereich berücksichtigt, damit eine sichere Interpretation von Abstandsinformationen im Verhältnis zu der als Referenz hinterlegten Gestalt der Kraftfahrzeugtür getroffen werden kann. Durch diese spezielle Ausbildung der Abstandsmessung auf Basis einer Phasenlaufzeitmessung in Verbindung mit dem Vergleich der erfassten Abstände von potentiellen Hindernissen von dem Sensormittel relativ zu der Gestalt der Tür gelingt es, eine verlässliche Aussage über ein tatsächlich zu erwartendes Zusammenprallen des Hindernisses mit der Kraftfahrzeugtür zu treffen. Dabei hat es sich besonders bewährt, den flächigen Überwachungsbereich entsprechend der Kontur der Kraftfahrzeugtür auszubilden und den Abstand entweder im wesentlichen konstant oder mit zunehmend Abstand von der Schwenkachse der Kraftfahrzeugtür im wesentlichen wachsend auszubilden. Dies führt zu einer besonders sicheren Unterscheidung von tatsächlichen und nur scheinbaren Hindernissen für das Öffnen der Kraftfahrzeugtür.

Durch die Verwendung eines Phasenlaufzeitverfahrens zur Bestimmung des Abstandes von potentiellen Hindernissen gelingt es zudem, eine verbesserte Augensicherheit zu ermöglichen und damit die Gefahr von Augenschädigungen durch die verwendete Lichtquelle zu vermeiden, da die erfindungsgemäße Lichtquelle mit geringerer optischer Leistung, insbesondere als gepulste Lichtquelle, mit harmonisch modulierten Amplitudensignalen ausgebildet sein kann, die sich gerade durch kurze Pulszeiten gefolgt von ausgeprägten Pulspausezeiten auszeichnet.

Wurde durch die Auswerteeinheit der Türraumüberwachungsvorrichtung ein tatsächliches Hindernis in dem Türschwenkbereich erkannt, so wird bevorzugt ein Warnsignal abgegeben, das den Fahrzeugführer dazu veranlasst, von einem weiteren Öffnen der Tür abzusehen oder alternativ bzw. ergänzend ein weiteres automatisches Öffnen der Kraftfahrzeugtür durch entsprechende Steuersignale zu unterbrechen oder aktiv ein weiteres Öffnen der Kraftfahrzeugtür zu verhindern. Durch diese Vorkehrungen ist sichergestellt, dass die Tür nicht ungewollt weiter geöffnet wird und es zu einer Beschädigung der Kraftfahrzeugtür oder/und des Hindernisses kommt.

Im folgenden wird die Erfindung anhand einer beispielhaften Ausführung der Erfindung erläutert.
- Figur 1: zeigt den Aufbau eines beispielhaften Sensormittels und
- Figur 2: zeigt ein beispielhaftes funktionelles Zusammenwirken der Komponenten einer Türraumüberwachungsvorrichtung.

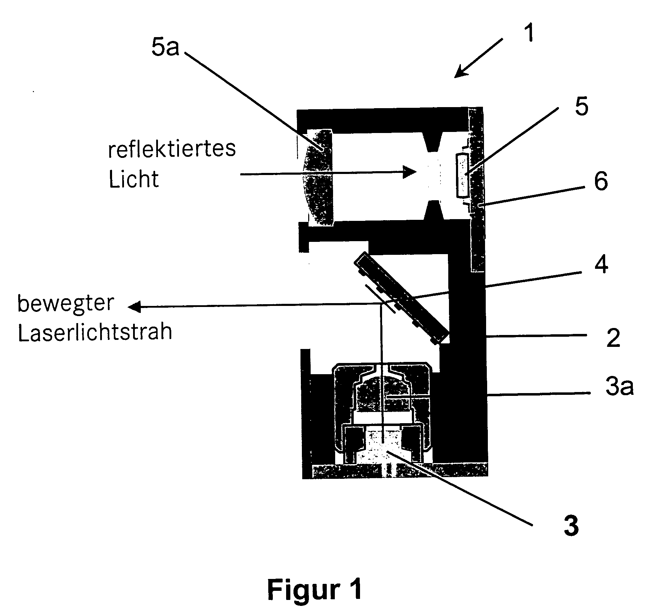

Das in Figur 1 dargestellte Sensormittel 1 einer Türraumüberwachungsvorrichtung zeigt ein Gehäuse 2, in welchem die Lichtquelle 3, welche als Laserdiode ausgebildet ist, eine Mikro-Spiegel-Einheit 4 und eine Photoempfänger 5 angeordnet ist. Dabei ist die Laserdiode 3 von dem Photoempfänger räumlich durch die Mikro-Spiegel-Einheit 4 getrennt.

Der Laserdiode 3 ist eine Optik 3a zugeordnet, die als Kollimator für den durch die Laserdiode emittierten Lichtstrahl wirkt. Der Lichtstrahl wird auf die Mikro-Spiegel-Einheit 4 geworfen. Die Mikro-Spiegel-Einheit 4 zeigt eine Vielzahl von mikromechanisch angetriebenen Mikrospiegeln. Diese werden durch eine auf einer Platine 6 aufgebrachten Steuereinheit dahingehend gesteuert, dass die Mikrospiegel mikromechanisch angetrieben verschwenkt werden können. Die Verschwenkung wird so gesteuert, dass ein verschwenkbarer Lichtstrahl das Sensormittel 1 verlässt. Die mikromechanisch angetriebenen Mikrospiegel sind auf einem gemeinsamen Träger, welcher in einer festen, statischen Verbindung mit dem Gehäuse 2 des Sensormittels 1 steht, angebracht. Der bewegte Lichtstrahl wird so durch die verschwenkbaren Mikrospiegel bewegt, dass er in einem flächigen Überwachungsbereich verschwenkt, bewegt wird. Von Objekten, welche in den Überwachungsbereich gelangen oder sich in diesem befinden, wird der Lichtstrahl reflektiert und durch die Photoempfängeroptik 5a erfasst und auf den Photoempfänger 5 gebündelt. Der Photoempfänger 5 wandelt das reflektierte Licht in elektrische Signale um, die einer auf der Platine 6 angeordneten Auswerteeinrichtung zugeführt werden. Diese Auswerteeinrichtung stellt anhand der von dem Photoempfänger 5 zugeführten elektrischen Signale fest, ob Objekte in den Überwachungsbereich eingedrungen sind oder nicht.

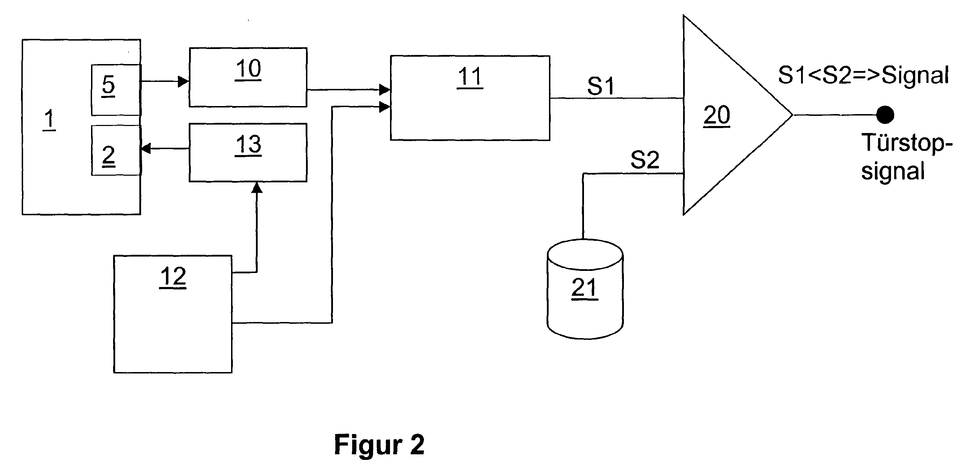

Eine beispielhafte Funktionsweise der Türraumüberwachungsvorrichtung wird im folgenden anhand der Figur 2 näher erläutert.

Das vom Photoempfänger 5 zugeführte elektrische Empfangssignal, welche das reflektierte empfangene Licht repräsentiert, wird einem Verstärker 10 zugeführt, der das elektrische Signal verstärkt und damit eine Phasenlaufzeitmessung durch die Phasenlaufzeitmesseinheit 11 in besonderen Maß ermöglicht. Der Phasenlaufzeitmesseinheit 11 wird neben dem verstärkten Empfangssignal auch ein Referenzsignal zugeführt, das durch den Signalgenerator 12 generiert wurde. Dieser Signalgenerator generiert das Modulationssignal für den Lasertreiber 13, der der Laserlichtquelle 2 zugeordnet ist. In Kenntnis der Modulation des durch die Laserquelle 2 emittierten Lichts und der Modulation des empfangenen Lichtes bzw. der Referenzsignale, welche durch den Signalgenerator 12 generiert wurden, bzw. der elektrischen Empfangssignale gelingt es, die Länge des Lichtweges von der Lichtquelle 2 über den die Reflektion bewirkenden Gegenstand zu der Photodiode 5 und damit den Abstand S1 zwischen dem reflektierenden Gegenstand (Hindernis) zu den Sensormitteln zu bestimmen. Der Abstand S1 wird mit einem Referenzabstand S2 verglichen. Dieser Vergleich erfolgt in der Komparatorstufe 20. Ist der Abstand S1 kleiner als der Referenzabstand S2, welcher ein Maß für die Ausdehnung der Kraftfahrzeugtür darstellt, so wird daraus geschlossen, dass es sich um ein relevantes Hindernis handelt, welches zu einem Türstopsignal führt. Anhand dieses Türstopsignals wird ein automatischer Türöffnungsprozess unterbrochen und damit ein weiteres automatisiertes Öffnen, das heißt das weitere Verschwenken, der Tür verhindert. Ist der Abstand S1 größer als der Referenzwert S2, so wird daraus geschlossen, dass es sich nicht um ein relevantes Hindernis handelt, welches zu einer Beschädigung der Tür führen wird, da es außerhalb des Schwenkbereichs der Kraftfahrzeugtür liegt.

In dem Speicher 21 ist in Form eine Look-up-Tabelle eine Vielzahl von Referenzwerten S2 abgelegt. Die Referenzwerte S2 repräsentieren die Gestalt der Kraftfahrzeugtür, indem ausgehend von der Position des Sensormittels die Ausdehnung der Kraftfahrzeugtür entsprechend dem flächigen Überwachungsbereich in Abhängigkeit eines Elevationswinkels bestimmt und hinterlegt ist. Mit Hilfe des Signalgenerators 12, welche Teil der Steuereinheit des Sensormittels 1 ist, wird ein Verschwenken der Mikrospiegel der Mikro-Spiegel-Einheit dahingehend wirkt, dass der emittierte Lichtstrahl in den betreffenden Elevationswinkeln verschwenkt wird. Tritt bei dem Ausstrahlen des modulierten Lichtsignals durch die Lichtquelle 2 bei einem vorgegebenen Elevationswinkel ein beachtliches empfangenes, reflektiertes Lichtsignal auf, das einer Auswertung zur Abstandsbestimmung mittels der Phasenlaufzeitmessungseinheit 11 zugeführt wird, so wird das Signal ausgewertet und der Abstand S1 bestimmt. Der Abstand S1 bei dem vorgegebenen Elevationswinkel beim Aussenden wird mit dem Referenzabstand S2 bei einem entsprechenden Elevationswinkel aus der Look-up-Tabelle verglichen und daraus abgeleitet, ob es sich um ein relevantes Hindernis handelt oder nicht.

Durch die geeignete Ausbildung der Mikro-Spiegel-Einheit 4 ist eine im wesentlichen flächiger Überwachungsbereich geschaffen, der einen weitgehend gleichen Abstand zu der Kraftfahrzeugtür aufweist und der eine vergleichbare Kontur zu der Kraftfahrzeugtür aufweist. In dem flächigen Überwachungsbereich lassen sich Hindernisse durch die Türrahmen-überwachungsvorrichtung sicher erkennen und entscheiden, ob es sich anhand der Abstandsmessung mit Hilfe eines Phasenlaufzeitverfahrens um ein relevantes Hindernis handelt oder nicht.

Das in Figur 1 beschriebene Sensormittel 1 ermöglicht, durch die Auswertung der Sensormitteldaten entsprechend der Figur 2 eine sehr sichere und verlässliche Identifikation von relevanten Hindernissen, die ein Türstopsignal auslösen sollen. Die Türrahmenüberwachungseinrichtung mit einem Sensormittel 1 erweist sich als sehr kompakt, robust und sehr sicher in der Funktion.

## Patentansprüche

1. Türraumüberwachungsvorrichtung zur Überwachung eines Türschwenkbereiches einer Kraftfahrzeugtüre,
mit den Türschwenkbereich erfassenden Sensormitteln,
mit einer Sensordaten auswertenden Auswerteeinrichtung und mit einer Steuereinheit zur Steuerung von Sensormitteln oder von Auswerteeinrichtungen,
**dadurch gekennzeichnet,**
**dass** der durch Sensormittel erfasste Überwachungsbereich im wesentlichen flächig ausgebildet ist,
**dass** das Sensormittel mindestens eine Lichtquelle zur Ausendung eines verschwenkbaren Lichtstrahls, mindestens eine Mikro-Spiegel-Einheit und mindestens einem Photoempfänger zur Erfassung des flächigen Überwachungsbereiches aufweist.

2. Türraumüberwachungsvorrichtung nach Anspruch 1,
**dadurch gekennzeichnet,**
**dass** der Mikro-Spiegel-Einheit mit ihrem wenigstens einen mikromechanisch verschenkbaren planen Spiegel ein zusätzlicher nicht planer Spiegel zugeordnet ist.

3. Türraumüberwachungsvorrichtung nach Anspruch 1 oder 2,
**dadurch gekennzeichnet,**
**dass** der zusätzlicher nicht planer Spiegel in seiner Kontur entsprechend der Kontur der Kraftfahrzeugtüre gewählt ist.

4. Türraumüberwachungsvorrichtung nach Anspruch 2 oder 3,
**dadurch gekennzeichnet,**
**dass** der zusätzlicher nicht planer Spiegel verschwenkbar und insbesondere mikromechanisch angetrieben ausgebildet ist.

5. Türraumüberwachungsvorrichtung nach einem der vorstehenden Ansprüche,
**dadurch gekennzeichnet,**
**dass** die Lichtquelle zur Ausendung eines verschwenkbaren Lichtstrahls, die Mikro-Spiegel-Einheit und der Photoempfänger zur Erfassung des flächigen Überwachungsbereiches an oder im, welcher an der Kraftfahrzeugtüre befestigt ist, Außenspiegel oder an oder im Kraftfahrzeugtürgriff angeordnet sind.

6. Türraumüberwachungsvorrichtung nach einem der vorstehenden Ansprüche 1 bis 4,
**dadurch gekennzeichnet,**
**dass** die Lichtquelle zur Ausendung eines verschwenkbaren Lichtstrahls, die Mikro-Spiegel-Einheit und der Photoempfänger zur Erfassung des flächigen Überwachungsbereiches im Bereich der Schwenkachse der Kraftfahrzeugtüre angeordnet sind.

7. Türraumüberwachungsvorrichtung nach einem der vorstehenden Ansprüche,
**dadurch gekennzeichnet,**
**dass** die Lichtquelle zur Ausendung eines verschwenkbaren Lichtstrahls, die Mikro-Spiegel-Einheit und der Photoempfänger zur Erfassung des flächigen Überwachungsbereiches in einem gemeinsamen Gehäuse angeordnet sind.

8. Türraumüberwachungsvorrichtung nach Anspruch 7,
**dadurch gekennzeichnet,**
**dass** in dem Gehäuse die Mikro-Spiegel-Einheit zwischen der Lichtquelle zur Ausendung eines verschwenkbaren Lichtstrahls und dem Photoempfänger angeordnet ist und dass seitlich versetzt dazu die Steuereinheit und/oder die Auswerteeinrichtung insbesondere auf einer gemeinsamen Platine angeordnet sind.

9. Türraumüberwachungsvorrichtung nach einem der vorstehenden Ansprüche,
**dadurch gekennzeichnet,**
**dass** wenigstens ein Photoempfänger als PIN-Diode aufgebildet ist.

10. Türraumüberwachungsvorrichtung nach einem der vorstehenden Ansprüche,
**dadurch gekennzeichnet,**
**dass** die Steuereinheit so ausgebildet ist, dass die durch die Steuereinheit gesteuerte Lichtleistung der Lichtquelle abhängig vom Maß der Verschwenkung des wenigstens einen mikromechanischen Spiegels der Mikro-Spiegel-Einheit gewählt ist.

11. Türraumüberwachungsvorrichtung nach einem der vorstehenden Ansprüche,
**dadurch gekennzeichnet,**
**dass** die Steuereinheit so ausgebildet ist, dass die durch die Steuereinheit gesteuerte Verschwenkung des wenigstens einen mikromechanischen Spiegels der Mikro-Spiegel-Einheit regelmäßig über einen vorgegebenen Schwenkbereich zur Erzeugung eines in dem flächigen Überwachungsbereiche verlaufenden Lichtstrahls erfolgt.

12. Türraumüberwachungsvorrichtung nach Anspruch 11,
**dadurch gekennzeichnet,**
**dass** die Steuereinheit so ausgebildet ist, dass ein Verschwenken über einen vorgegebenen Schwenkbereich in einer Zeitspanne TS von unter 5 ms erfolgt.

13. Türraumüberwachungsvorrichtung nach Anspruch 12,
**dadurch gekennzeichnet,**
**dass** die Steuereinheit so ausgebildet ist, dass zwischen zwei Verschenkvorgängen eines Zeitspanne TP von über 25 ms und insbesondere unter 50 ms erfolgt.

14. Türraumüberwachungsvorrichtung nach Anspruch 12 oder 13,
**dadurch gekennzeichnet,**
**dass** die Steuereinheit so ausgebildet ist, dass die Lichtquelle und insbesondere der Photoempfänger im wesentlichen nur während der Verschwenkvorgänge insbesondere nur während jedes n-ten Verschenkvorgang mit n kleiner 10 aktiviert ist.

15. Türraumüberwachungsvorrichtung nach einem der vorstehenden Ansprüche,
**dadurch gekennzeichnet**,
die Lichtquelle zur Ausendung eines verschwenkbaren Lichtstrahls, die Mikro-Spiegel-Einheit und der Photoempfänger zur Erfassung des flächigen Überwachungsbereiches so angeordnet sind, dass im wesentlichen mit zunehmendem Abstand des flächigen Überwachungsbereiches von der Schwenkachse der Kraftfahrzeugtüre der Abstand zur Kraftfahrzeugtüre zunimmt.

16. Türraumüberwachungsvorrichtung nach einem der vorstehenden Ansprüche,
**dadurch gekennzeichnet,**
**dass** die Lichtquelle zur Ausendung eines verschwenkbaren Lichtstrahls, die Mikro-Spiegel-Einheit und der Photoempfänger zur Erfassung des flächigen Überwachungsbereiches in einem gemeinsamen Gehäuse sowie die Auswerteinheit zur Abstandsmessung mittels eines Phasenlaufzeitverfahrens ausgebildet sind.

17. Türraumüberwachungsvorrichtung nach Anspruch 16,
**dadurch gekennzeichnet,**
**dass** die Auswerteinheit geeignet ist, anhand einer insbesondere in einer Look-up-Tabelle hinterlegten die Gestalt der Kraftfahrzeugtür entsprechenden Referenz eine Relevanzbeurteilung von potentiell Detektierten Hindernissen durchzuführen.

18. Türraumüberwachungsvorrichtung nach einem der vorstehenden Ansprüche,
**dadurch gekennzeichnet,**
**dass** abhängig von der Detektion eines Hindernisses in dem Türschwenkbereich ein Warnsignal abgegeben wird, ein weiteres automatisches Öffnen der Kraftfahrzeugtüre unterbrochen oder ein weiteres Öffnen der Kraftfahrzeugtüre aktiv verhindert wird.
